(19) Europäisches Patentamt
European Patent Office
Office européen des brevets

(11) Numéro de publication: 0 336 854 A1

(12) DEMANDE DE BREVET EUROPEEN

(21) Numéro de dépôt: 89420098.9

(22) Date de dépôt: 17.03.89

(51) Int. Cl.4: C 08 G 77/20
C 08 G 77/14, C 08 G 77/44

(30) Priorité: 24.03.88 FR 8804138

(43) Date de publication de la demande:
11.10.89 Bulletin 89/41

(84) Etats contractants désignés:
AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: Torres, Ghislaine
104, rue Ney
F-69006 Lyon (FR)

Lebrun, Jean-Jacques Centre Hospitalier Lyon-Sud
Chemin du Grand Revoyet
F-69310 Pierre-Benite (FR)

(74) Mandataire: Seugnet, Jean Louis et al
RHONE-POULENC CHIMIE Service Brevets Chimie
Centre de Recherches des Carrières B.P. 62
F-69192 Saint-Fons Cédex (FR)

# (54) Diorganopolysiloxane porteur à la fois de radicaux vinyle et de radicaux organiques époxy-fonctionnel.

(57) La présente invention concerne des diorganopolysiloxanes comportant par molécule au moins un radical vinyle lié directement à un atome de silicium et au moins un radical organique époxy-fonctionnel ayant de 4 à 20 atomes de carbone.

Ces diorganopolysiloxanes peuvent être préparés par polymérisation en présence d'un catalyseur alcalin, d'un polydiorganosiloxane cyclique ou linéaire portant par molécule au moins un radical vinyle suivi de l'addition, après amorçage de la polymérisation, d'un oligomère polydiorganosiloxane porteur d'au moins un radical organique époxy-fonctionnel ayant de 4 à 20 atomes de carbone.

Les diorganopolysiloxanes sont utilisables notamment comme agent d'adhérence de composition de silicone vulcanisable à chaud en présence d'un péroxyde organique.

EP 0 336 854 A1

## Description

### DIORGANOPOLYSILOXANE PORTEUR A LA FOIS DE RADICAUX VINYLE ET DE RADICAUX ORGANIQUE EPOXY-FONCTIONNEL

La présente invention concerne un diorganopolysiloxane porteur à la fois de radicaux vinyle et de radicaux organiques époxy-fonctionnels.

Par le brevet US-A-4 033 924 on connait déjà des diorganopolysiloxanes porteurs à la fois de radicaux vinyle et de radicaux organiques époxy-fonctionnels.

Selon l'enseignement de ce brevet, le polymère est préparé par réaction de condensation d'un trialcoxysilane présentant en outre un radical époxy-fonctionnel sur un polyvinylméthylsiloxane à extrémités silanol.

Selon ce procédé il est clair que l'on ne peut obtenir qu'un polymère linéaire et non cyclique ne présentant au plus que deux radicaux époxy-fonctionnels toujours en bout de chaîne. Par ailleurs le polymère présente nécessairement des radicaux alcoxy en bout de chaîne.

Dans le brevet précité, le polymère est utilisé comme agent d'adhérence dans des compositions élastomère silicone vulcanisable à chaud (compositions EVC).

En fait pour cette application particulière le polymère obtenu selon l'enseignement de US-A-4 033 924 peut présenter une teneur en époxy insuffisante. De plus le procédé de préparation du polymère est onéreux car il part d'un polyvinylméthylsiloxane à extrémités silanol qui est un polymère difficile à préparer.

Un but de la présente invention est de proposer un diorganopolysiloxane porteur à la fois de radicaux vinyle et de radicaux organiques époxy-fonctionnels, dont les radicaux vinyle et/ou époxy-fonctionnels puissent être situés aux extrémités ou dans la chaîne.

Un autre but de la présente invention est de proposer un polymère du type ci-dessus pouvant présenter plus de deux radicaux organiques époxy-fonctionnels et sans radicaux alcoxy.

Un autre but de la présente invention est de proposer un polymère du type ci-dessus qui puisse être cyclique.

Un autre but de la présente invention est de proposer un procédé de préparation d'un polymère du type ci-dessus qui soit simple, peu onéreux, qui utilise des matières premières courantes et qui puisse être mis en oeuvre à l'échelle industrielle.

Ces buts et d'autres sont atteints par la présente invention qui concerne en effet un polydiorganosiloxane choisi parmi ceux de formule :

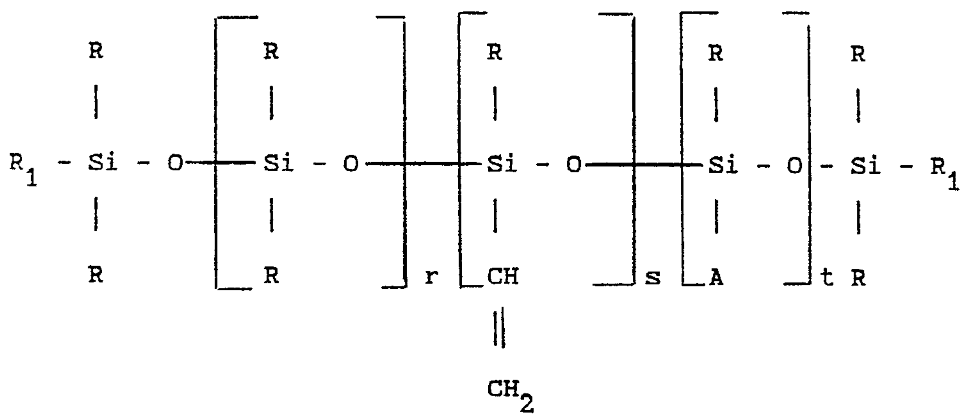
(1)

dans laquelle :

- les radicaux R sont des radicaux hydrocarbonés monovalents choisis parmi les radicaux alkyle en $C_1$-$C_{20}$, phényle et trifluoro-3,3,3 propyle,
- les radicaux $R_1$, identiques ou différents sont choisis parmi un radical R, un radical A, un radical vinyle et un radical hydroxyle,
- le radical A est un radical organique époxy-fonctionnel ayant de 4 à 20 atomes de carbone,
- r est un nombre entier compris entre 0 et 6 000,
- s est un nombre entier compris entre 0 et 200,
- t est un nombre entier compris entre 0 et 100,

sous réserve que si S = 0, au moins un des radicaux $R_1$ est un radical vinyle,

si t = 0, au moins un des radicaux $R_1$ est un radical A,

et si s = 0, t = 0, r est alors supérieur à 1, de préférence supérieur à 5, l'un des radicaux $R_1$ étant vinyle, l'autre radical $R_1$ étant un radical A.

Et ceux de formule :

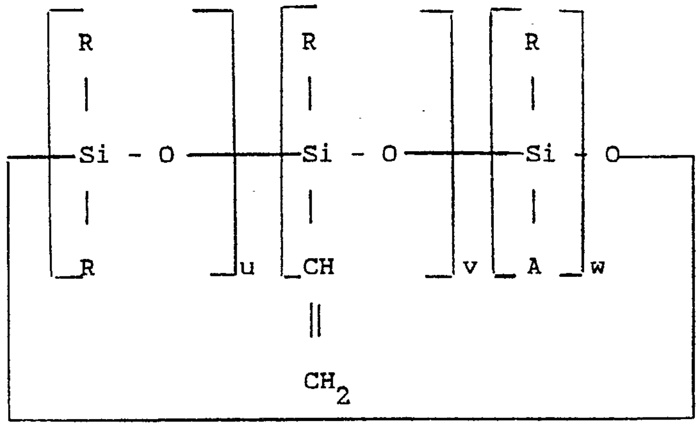

(2)

dans laquelle R et A ont la même signification qu'à la formule (1) ci-dessus.

- u est un nombre entier compris entre 0 et 10 inclus,
- v est un nombre entier compris entre 1 et 10 inclus,
- w est un nombre entier compris entre 1 et 10 inclus sous réserve que la somme de u + v + w soit au moins égale à 3.

Dans la formule (1) ci-dessus, les produits préférés sont ceux pour lesquels au moins 80 % et jusqu'à 100 % en nombre des radicaux R sont des radicaux méthyle.

Les radicaux R peuvent être également en particulier éthyle, propyle, butyle, hexyle, (éthyl-2) hexyle, octyle, undécyle, phényle et trifluoro-3,3,3-propyle.

Les polymères linéaires de formule (1), suivant les valeurs de r, s et t, peuvent être des huiles ou des gommes. Les polymères de formule (2) suivant les valeurs de u, v, w sont généralement des fluides ou des solides.

Le radical organique époxy-fonctionnel présente de 4 à 20 atomes de carbone, de préférence de 5 à 12.

Des exemples de radicaux A sont les suivants :

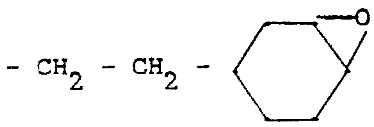

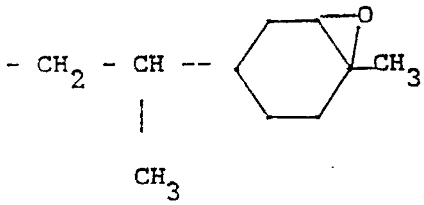

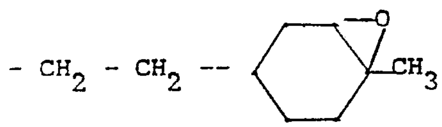

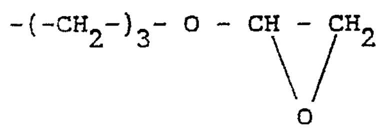

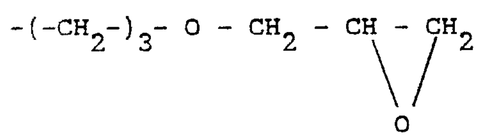

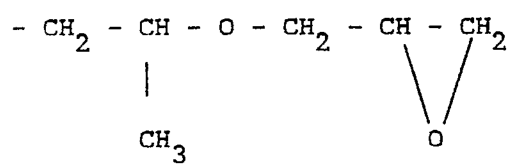

De préférence dans la formule (1) s et t sont au moins égaux à 1, r est compris entre 5 et 500.

De façon plus préférée s est compris entre 1 et 50, t est compris entre 1 et 30 et r est compris entre 30 et 300.

Dans la formule (2) u, v, w sont de préférence compris entre 1 et 5 inclus avec $u + v + w$ compris entre 3 et 10 inclus.

Les polymères de formules (1) et (2) sont utilisables en particulier comme agent d'adhérence de compositions élastomère silicones vulcanisables à chaud en présence d'un péroxyde organique. Dans cette application on utilise de 0,1 à 10 parties en poids de polymère pour 100 parties de poids de gomme silicone.

Les polymères de formules (1) et (2) sont utilisables comme lubrifiants du PVC à une teneur de 0,001 à 1 partie en poids de polymère pour 100 parties de PVC.

Les polymères selon l'invention sont également utilisables comme adhésifs et comme revêtements en couche mince (épaisseur généralement comprise entre 1 et 200 µm), réticulables sous un rayonnement UV en présence d'un photo-initiateur.

La présente invention concerne également un procédé de préparation des polydiorganosiloxanes de formules (1) et (2) selon lequel on polymérise un mélange d'au moins un oligomère polydiorganosiloxane cyclique ou linéaire portant par molécule au moins un radical vinyle lié directement à l'atome de silicium et au moins un oligomère polydiorganosiloxane cyclique ou linéaire portant par molécule au moins un radical organique époxy fonctionnel ayant de 4 à 20 atomes de carbone, en présence d'une quantité catalytiquement efficace d'un catalyseur basique.

Selon un mode de mise en oeuvre préféré de ce procédé :

- on amorce, dans une première étape, la polymérisation d'au moins un oligomère polydiorganosiloxane cyclique ou linéaire portant par molécule au moins un radical vinyle lié directement à l'atome de silicium en

présence d'une quantité catalytiquement efficace d'un catalyseur basique, et
- on ajoute, dans une deuxième étape, dans l'intervalle de temps situé entre le début et la fin de la polymérisation de la première étape, au moins un oligomère polydiorganosiloxane cyclique ou linéaire portant par molécule au moins un radical organique époxy-fonctionnel ayant de 4 à 20 atomes de carbone.

Les oligomères polydiorganosiloxanes cycliques ou linéaires portant par molécule au moins un groupe vinyle lié directement à l'atome de silicium peuvent en particulier être choisis parmi ceux de formule :

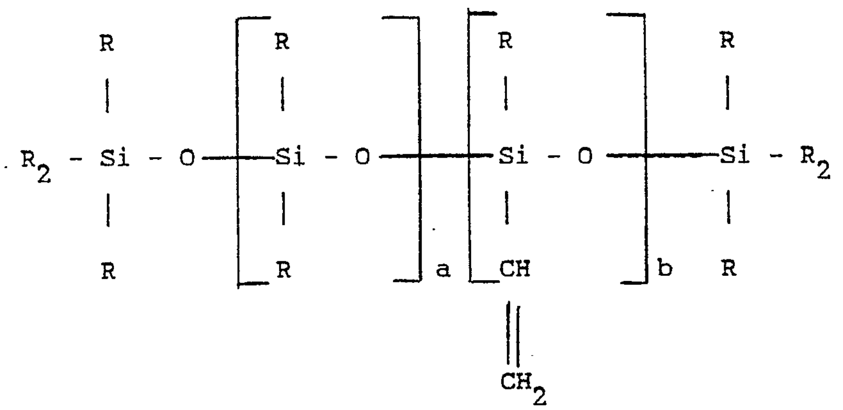

(3)

dans laquelle : les radicaux R ont la signification donnée à la formule (1) ci-dessus, $R_2$ est choisi parmi un radical R, un radical hydroxyle et un radical vinyle.
- a est un nombre entier choisi entre 0 et 50 inclus,
- b est un nombre entier choisi entre 0 et 20 inclus, sous réserve que si b = 0, au moins l'un des radicaux $R_2$ est un groupe vinyle.

Et ceux de formule :

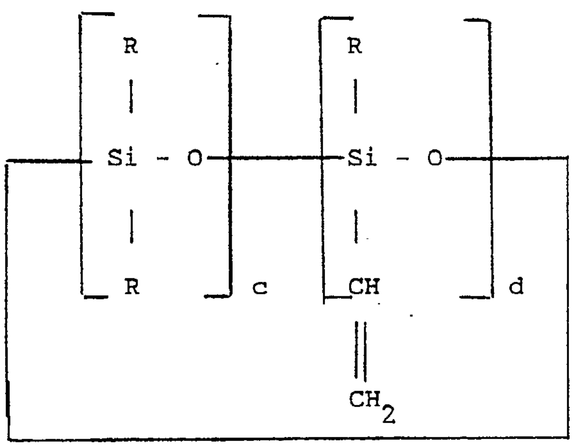

(4)

dans laquelle les radicaux R ont la signification donnée à la formule (1) ci-dessus,
- c est un nombre entier compris entre 0 et 10 inclus, et
- d est un nombre entier compris entre 1 et 10 inclus sous réserve que la somme c + d soit au moins égale à 3.

Les produits de formules (3) et (4) ci-dessus sont connus. Ils sont en particulier décrits dans l'ouvrage de NOLL, Chemistry and Technology of Silicones, Academic Press édition de 1968 en langue anglaise, ainsi que dans de nombreux brevets (US-A-3 220 972, US-A-3 284 406 et US-A-3 436 366).

On peut utiliser dans le procédé conforme à l'invention les différents catalyseurs alcalins dont l'emploi est préconisé pour la polymérisation d'oligomères diorganopolysiloxanes (c'est-à-dire les diorganopolysiloxanes de faible masse moléculaire et de faible degré de polymérisation).

Ces catalyseurs alcalins sont par exemple décrits à la page 227 de l'ouvrage de NOLL "Chemistry and Technology of Silicones" Academic Press, édition 1968 en langue anglaise. Ces catalyseurs alcalins englobent les hydroxydes de métaux alcalins, en particulier l'hydroxyde de lithium, l'hydroxyde de potassium, l'hydroxyde de sodium, l'hydroxyde de cesium. Ils englobent également les silanolates de métaux alcalins, en particulier de potassium ou de sodium, les alcoolates et les siliconates de métaux alcalins.

De façon à accélérer la réaction, il est avantageux d'utiliser en combinaison avec le catalyseur alcalin un agent séquestrant le cation du catalyseur, à la dose de 0,005 à 2 moles d'agent séquestrant par équivalent hydroxyde de métal alcalin ou alcalino-terreux.

Comme agents séquestrants utilisables dans l'application on peut notamment utiliser les éther-couronnes

("crown-ethers") selon l'enseignement des brevets US-A-4 157 337 et US-A-4 138 543, cités comme référence et les tris(oxoalkyl) amine selon l'enseignement des brevets US-A-4 362 855 et EP-A-180 527.

Parmi ces agents séquestrants on préfère tout particulièrement utiliser un composé polyhétéromacropolycyclique cryptand renfermant 2 atomes d'azote tertiaire reliés entre eux par 3 radicaux organiques hydrocarbonés divalents renfermant des hétéroatomes choisis parmi l'oxygène et le soufre. Ces cryptands sont décrits en détail dans les brevets US-A-4 138 543 et US-A-4 362 855 précités.

Les cryptands préférés répondent à la formule :

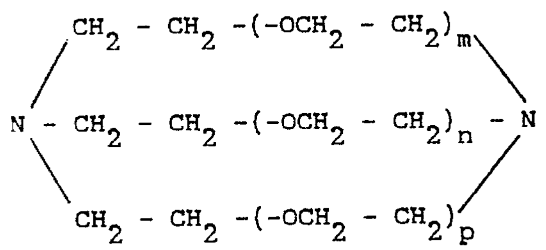

(5)

dans laquelle m est égal à 2 ou 3 et n et p sont choisis parmi 1, 2 et 3.

Le produit de formule (5) pour lequel m = n = p = 2 est nommé cryptand (2,2,2).

Le système destiné à catalyser la réaction de polymérisation selon l'invention, peut être utilisé en proportions très variées. Il se révèle particulièrement remarquable du fait qu'il peut être mis en oeuvre en très faible quantité. Habituellement, on utilise de 0,1 à 1 000 mg et préférentiellement de 1 à 100 mg d'équivalent d'hydroxyde de métal alcalin ou alcalino-terreux par kg de diorganopolysiloxane chargé. L'équivalent d'hydroxyde pour un dérivé alcalin ou alcalino-terreux quelconque est exprimé par le poids de la quantité d'hydroxyde du métal que l'on devrait ajouter et qui correspondrait au même nombre d'atomes grammes de métal alcalin ou alcalino-terreux que celui du dérivé alcalin ou alcalino-terreux utilisé. Par ailleurs, le rapport molaire agent séquestrant sur équivalent hydroxyde de métal alcalin ou alcalino-terreux est habituellement compris entre 0,005 et 2 et préférentiellement entre 0,01 et 1.

La température de la polymérisation peut se situer dans la gamme usuelle de température comprise entre 25 °C et 200 °C et de préférence entre 80 °C et 180 °C. Durant la polymérisation, l'eau est éventuellement éliminée du milieu réactionnel (dans le cas où la charge de départ est formée d'oligomère de formule (3) avec $R_2$ = hydroxyle), au fur et à mesure de sa formation par tout moyen approprié (distillation azéotropique ; élimination de l'eau sous pression réduite et sous pression de gaz inerte en particulier l'azote ...). Dans ces conditions, le système catalytique selon l'invention permet de réduire dans une proportion très importante la durée de la réaction de polymérisation. Par rapport au catalyseur alcalin utilisé seul, le gain peut atteindre et dépasser 75 %. Lorsque la viscosité souhaitée est atteinte, il est recommandé de désactiver le système catalytique par addition d'une très faible quantité d'un composé acide, de préférence du $CO_2$.

Dès l'instant où la polymérisation est amorcée (temps $t_1$) et avant de stopper cette polymérisation au degré voulu (temps $t_2$), on ajoute entre $t_1$ et $t_2$ l'oligomère polydiorganosiloxane cyclique ou linéaire portant par molécule au moins un radical époxy-fonctionnel.

Les temps $t_1$ et $t_2$ sont appréciés classiquement par mesure de la viscosité du mélange réactionnel.

De façon surprenante et inattendue on a trouvé conformément à l'invention que les fonctions époxy n'étaient pas affectées par les catalyseurs basiques dans la mesure où les oligomères sont ajoutés entre $t_1$ et $t_2$.

Ces fonctions époxy ne sont pas touchées malgré l'alcalinité du mélange réactionnel.

De plus, les fonctions époxy ne sont pas dégradées même si le milieu réactionnel est porté jusqu'à 200 °C. Il est toutefois souhaitable d'opérer à une température inférieure à 180 °C et supérieure à 80 °C.

Un tel résultat peut être aussi atteint si on ajoute les oligomères, porteurs d'au moins un radical époxy-fonctionnel aux oligomères porteurs d'au moins un groupe vinyle avant de commencer (amorcer) la polymérisation. Par contre on constate une dégradation des fonctions époxy si on utilise un catalyseur acide pour faire la polymérisation. Les oligomères porteurs d'au moins un radical organique époxy-fonctionnel peuvent être en particulier choisis parmi ceux de formule :

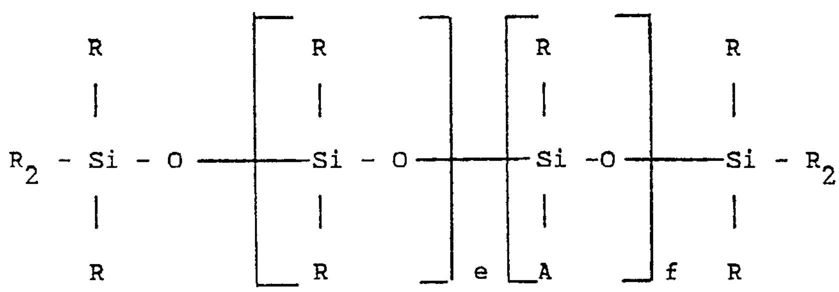

(6)

dans laquelle les radicaux R et A ont la même signification qu'à la formule (1) ci-dessus et $R_2$ est choisi parmi un radical R, un groupe hydroxyle et un groupe A,

- e est un nombre entier choisi entre 0 et 50,
- f est un nombre entier choisi entre 0 et 20,

sous réserve que si f = 0, au moins un des radicaux $R_2$ est A.

Et ceux de formule :

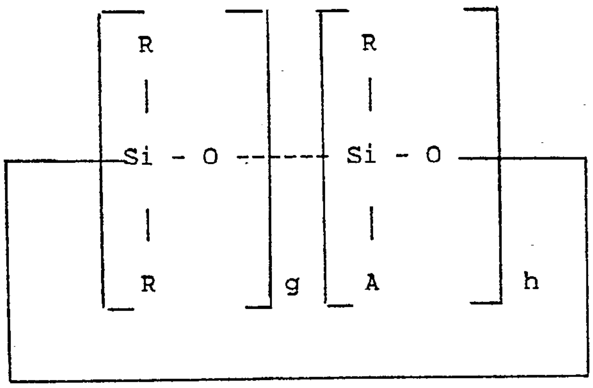

(7)

dans laquelle les radicaux R et A ont la signification donnée à la formule (1) ci-dessus,

- g est un nombre entier compris entre 0 et 10 inclus, et
- h est un nombre entier compris entre 1 et 10 inclus sous réserve que la somme g + h soit au moins égale à 3.

Les produits de formules (6) et (7) sont des produits connus et décrits dans la littérature.

Ainsi les produits de formule (6) sont en particulier décrits dans les brevets US-A-3 455 877, US-A-4 252 933 et FR-A-2 012 012, cités comme référence.

Ils peuvent être préparés sans difficulté par réaction d'hydrosilylation des polyhydrogénoorganosiloxanes correspondants formules (6) et (7) dans lesquelles le radical A est remplacé par un atome d'hydrogène, sur le composé organique époxy-fonctionnel à insaturation alcénique correspondant au radical A.

L'homme de l'art sait choisir les oligomères de départ de formules (5), (6) et (7) en vue d'obtenir les polymères désirés de formules (1) et (2).

Suivant les choix des oligomères de départ on peut obtenir un mélange de produits de formules (1) et (2) qu'il est facile de séparer par distillation. Dans le cas où l'on veut obtenir des produits de formule (1) dans laquelle $R_1$ est un groupe hydroxyle il suffit d'arrêter la polymérisation en neutralisant le catalyseur alcalin.

Dans le cas où l'on veut obtenir des produits de formule (1) dans laquelle $R_1$ est un radical R, il suffit pour cela, après la polymérisation, d'ajouter par exemple un composé organosilicié susceptible de réagir avec les hydroxyle terminaux par exemple un silane ou un silazane de formule :

$(R)_3SiCl$ , $(R)_3SiNHSi(R)_3$ ,

ou d'ajouter en fin de polymérisation un bloqueur de formule :

$(R)_3SiOSi(R)_3$

De la même façon si l'on veut obtenir un polymère de formule (1) dans laquelle $R_1$ est un radical vinyle ou un radical A il suffit d'effectuer les mêmes opérations que ci-dessus avec un silane ou un silazane de formule :

$R_1(R)_2SiCl$ , $R_1(R)_2SiNHSi(R)_2R_1$

ou un disiloxane de formule :

$R_1(R)_2$ Si- O - Si $(R)_2$ $R_1$

$R_1$ désignant respectivement un radical vinyle ou le radical A.

La réaction de polymérisation est de préférence mise en oeuvre en masse, toutefois il est tout à fait possible d'utiliser un solvant tel que les hydrocarbures aliphatiques ou aromatiques.

Les exemples suivants illustrent l'invention sans en limiter la portée.

- EXEMPLE 1 :

Dans un réacteur de 1 litre en acier inoxydable pourvu d'un agitateur central, on charge sous azote :

- 39,3 g de tétraméthyl-1,3,5,7 tétravinyl-1,3,5,7 cyclotétrasiloxane,
- 240 g d'octaméthylcyclotétrasiloxanee,
- 3,5 mg d'équivalent KOH introduit sous la forme de siliconate de potassium,
- 3 mg de cryptand (2,2,2) à savoir le diaza-1,10 hexaoxa-4,7,13,16,21,24 bicyclo(8,8,8) hexacosane.

On élève progressivement la température à 155 °C en maintenant l'agiration.

La polymérisation s'amorce et dès que la viscosité du mélange réactionnel dépasse 5 000 mPa.s à 155 °C, on ajoute 100 g de l'huile de formule moyenne :

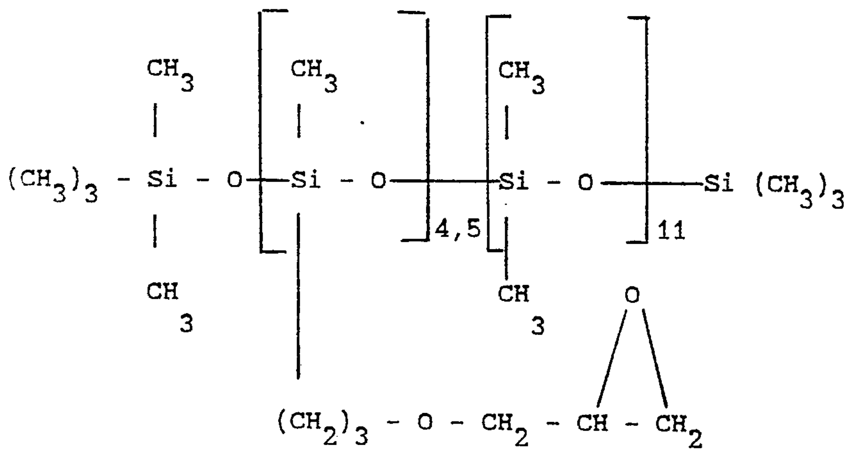

de caractéristiques suivantes :
Mn = 1 250 (masse moléculaire en nombre)
Teneur en époxy : 260 meq/100g

Instantanément, on observe une diminution de viscosité due à la dilution. Le mélange réactionnel est alors maintenu, pendant 4 heures, à 146 °C. La viscosité du mélange réactionnel continue de décroître régulièrement à cause de réarrangement des liaisons siloxanes. Le mélange réactionnel est ensuite neutralisé par barbotage de $CO_2$ puis filtré au noir de carbone.

Le taux de volatils contenu dans le mélange réactionnel est mesuré de la manière suivante :
on introduit 2 g de mélange dans une coupe en aluminium que l'on porte à 175 °C durant deux heures sous un vide de 1,3 KPa,
après refroidissement la coupe est pesée ce qui permet d'évaluer les pertes pondérales et donc le taux de volatils qui est en l'occurence de 13 % (en poids).

L'huile dévolatilisée présente une viscosité à 25 °C de 106 mPa.s.

L'analyse par résonance magnétique nucléaire (RMN) $Si^{29}$ permet de déterminer la formule moyenne du polymère à partir de l'intensité des signaux émis par les différents silicium de la molécule.

| ATTRIBUTION | δppm (TMS) |
|---|---|
| $(CH_3)_3SiO_{1/2}$ | - 7,0 |
| $(CH_2 = CH)(CH_3)SiO$ | - 33,7 à - 36,0 |
| (époxy)$(CH_3)SiO$ | - 18,9 à - 22,9 |

La formule moyenne de l'huile obtenue est donc la suivante :

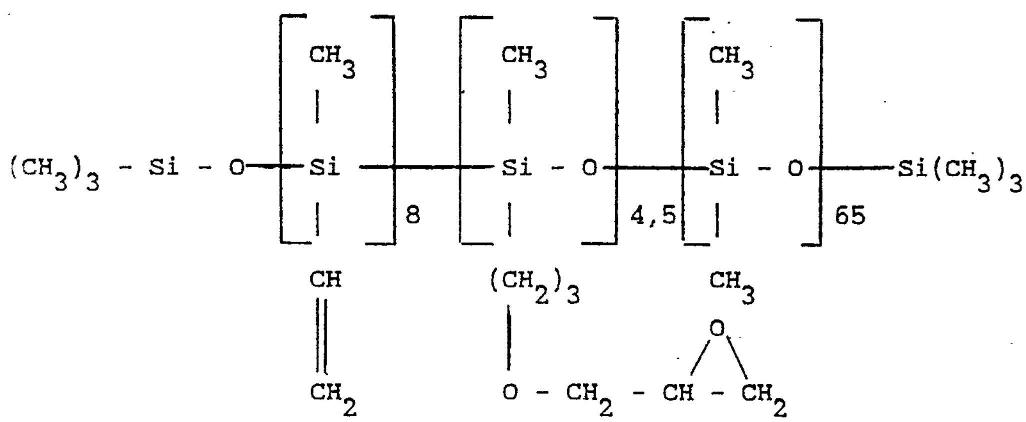

La RMN $^1H$ prouve que toutes les fonctions époxy introduites demeurent intactes après la polymérisation.

| ATTRIBUTION | δppm (TMS) |
|---|---|
| $Si\underline{CH_2}-CH_2-CH_2-O-$ | 0,49 |
| $SiCH_2-\underline{CH_2}-CH_2-O-$ | 1,61 |
| $SiCH_2-CH_2-\underline{CH_2}-O-$ | 3,41 |
| $-O-\underline{CH_2}-$ | 3,66<br>3,41 |
| 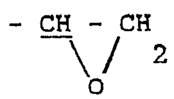 | 3,12 |
| 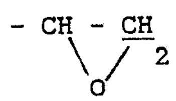 | 2,59<br>2,77 |

La pureté de l'huile obtenue est supérieure à 96 %.

- EXEMPLE 2 :

On procède exactement comme à l'exemple 1 sauf que l'on charge les oligomères suivants :

- octaméthylcyclotétrasiloxane : 78,4 g
- tétraméthyl-1,3,5,7 tétravinyl-1,3,5,7 cyclotétrasiloxane : 29,1 g.

Lorsque la viscosité a dépassé 5 000 mPa.s à 155 °C on ajoute l'huile de formule :

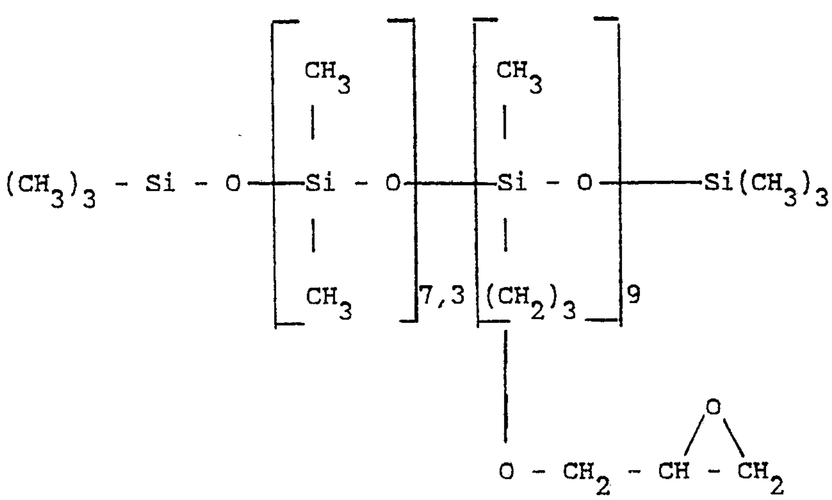

L'huile obtenue est dévolatilisée 10 minutes à 195 °C sous 0,06 KPa.

La RMN $^{29}Si$ montre que l'huile obtenue répond à la formule :

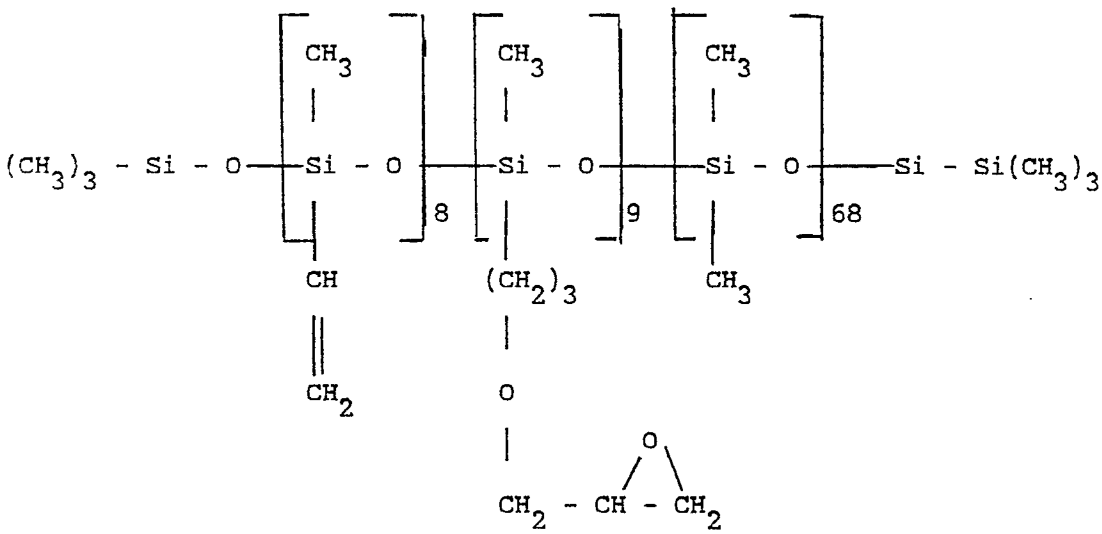

- EXAMPLE 3 :

Dans un réacteur de 1 litre en acier inoxydable pourvu d'un agitateur central on charge sous azote :

- 103,6 g d'octaméthylcyclotetrasiloxane
- 3,8 g de tétraméthyl-1,3,5,7 tétravinyl-1,3,5,7 cyclotétrasiloxane
- 50,4 g d'une huile de formule moyenne :

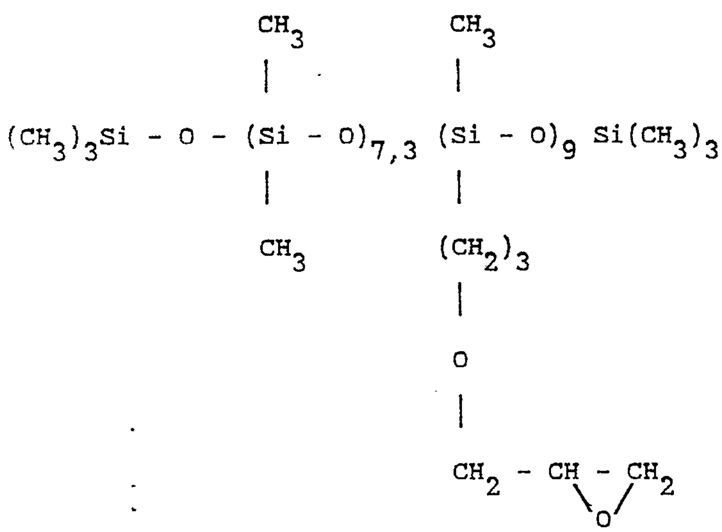

On élève progressivement la température jusqu'à 150 °C. Vers 65 °C le mélange, initialement hétérogène, devient homogène.

Une fois la température de 165 °C atteinte on ajoute :

- 3,5 mg d'équivalent KOH introduit sous la forme de siliconate de potassium
- 3 mg de cryptand (2,2,2) à savoir le diazo-1,10 hexaoxa-4,7,13,16,21,24 bicyclo (8,8,8) hexacosane.

Le mélange est maintenu 6 heures à 165 °C. La température est ensuite redescendue jusqu'à température ambiante. Le mélange réactionnel est neutralisé par barbotage de $CO_2$, puis filtré au noir de carbone.

Le taux de volatils contenu dans le mélange réactionnel est memsuré de la manière suivante :

On introduit 2 g de mélange dans une coupe en aluminium que l'on porte à 175 °C durant 2 heures sous un vide de 1,3 KPa.

Après refroidissement la coupe est pesée ce qui permet d'évaluer les pertes pondérales et donc le taux de volatils qui est en l'occurence de 8 % (en poids).

L'analyse par résonance magnétique nucléaire (RMN)$^{29}$Si permet de déterminer la formule moyenne du polymère à partir de l'intensité des signaux émis par les différents silicium de la molécule.

| ATTRIBUTION | δppm (TMS) |
|---|---|
| $(CH_3)_3SiO_{1/2}$ | - 7,0 |
| $(CH_2=CH)(CH_3)SiO$ | - 33,7 à - 36,0 |
| (époxy)$(CH_3)SiO$ | - 18,9 à - 22,9 |

La formule moyenne de l'huile obtenue est donc la suivante :

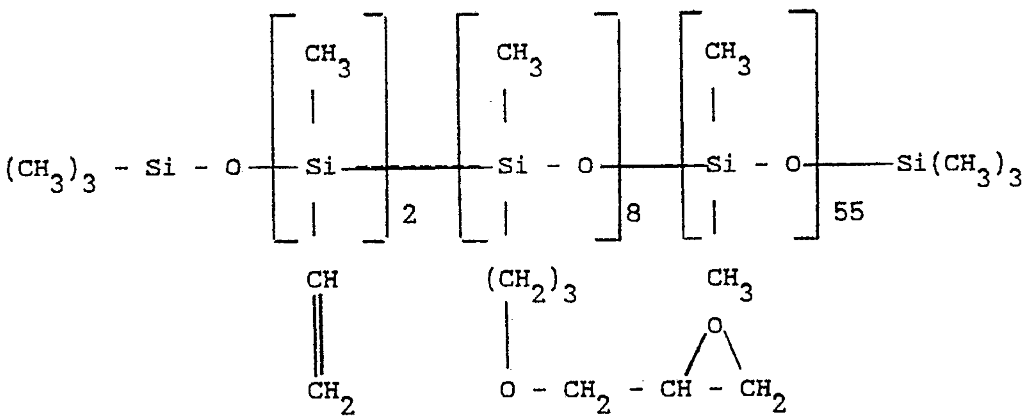

La RMN $^1$H prouve que toutes les fonctions époxy introduites demeurent intactes après la polymérisation.

| ATTRIBUTION | δppm (TMS) |
|---|---|
| $Si\underline{CH_2}-CH_2-CH_2-O-$ | 0,49 |
| $SiCH_2-\underline{CH_2}-CH_2-O-$ | 1,61 |
| $SiCH_2-CH_2-\underline{CH_2}-O-$ | 3,41 |
| $-O-\underline{CH_2}-$ | 3,66<br>3,41 |
| 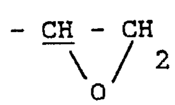 | 3,12 |
| 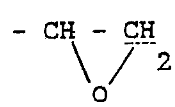 | 2,59<br>2,77 |

La pureté de l'huile obtenue est supérieure à 96 %.

- EXAMPLE 4 :

Dans un réacteur de 1 litre en acier inoxydable pourvu d'un agitateur central on charge sous azote :
- 96,4 g d'octaméthylcyclotetrasiloxane
- 0,96 g de tétraméthyl-1,3,5,7 tétravinyl-1,3,5,7 cyclotétrasiloxane
- 10,1 g d'une huile de formule moyenne :

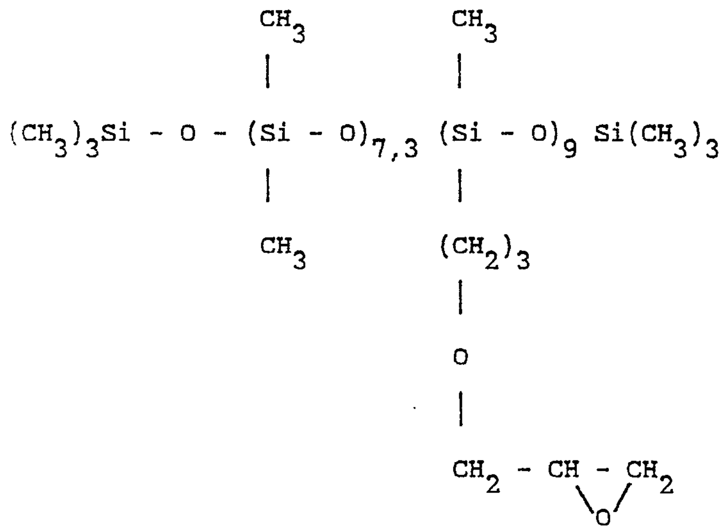

On élève progressivement la température jusqu'à 150 °C. Vers 65 °C le mélange, initialement hétérogène, devient homogène.

Une fois la température de 165 °C atteinte on ajoute :
- 2,5 mg d'équivalent KOH introduit sous la forme de siliconate de potassium
- 2 mg de cryptand (2,2,2) à savoir le diazo-1,10 hexaoxa-4,7,13,16,21,24 bicyclo (8,8,8) hexacosane.

Le mélange est maintenu 6 heures à 165 °C. La température est ensuite redescendue jusqu'à température ambiante. Le mélange réactionnel est neutralisé par barbotage de $CO_2$, puis filtré au noir de carbone.

Le taux de volatils contenu dans le mélange réactionnel est memsuré de la manière suivante :

On introduit 2 g de mélange dans une coupe en aluminium que l'on porte à 175 °C durant 2 heures sous un vide de 1,3 KPa.

Après refroidissement la coupe est pesée ce qui permet d'évaluer les pertes pondérales et donc le taux de volatils qui est en l'occurence de 8 % (en poids).

L'analyse par résonance magnétique nucléaire (RMN)$^{29}$Si permet de déterminer la formule moyenne du polymère à partir de l'intensité des signaux émis par les différents silicium de la molécule.

| ATTRIBUTION | δppm (TMS) |
|---|---|
| $(CH_3)_3SiO_{1/2}$ | - 7,0 |
| $(CH_2 = CH)(CH_3)SiO$ | - 33,7 à - 36,0 |
| (époxy)$(CH_3)SiO$ | - 18,9 à - 22,9 |

La formule moyenne de l'huile obtenue est donc la suivante :

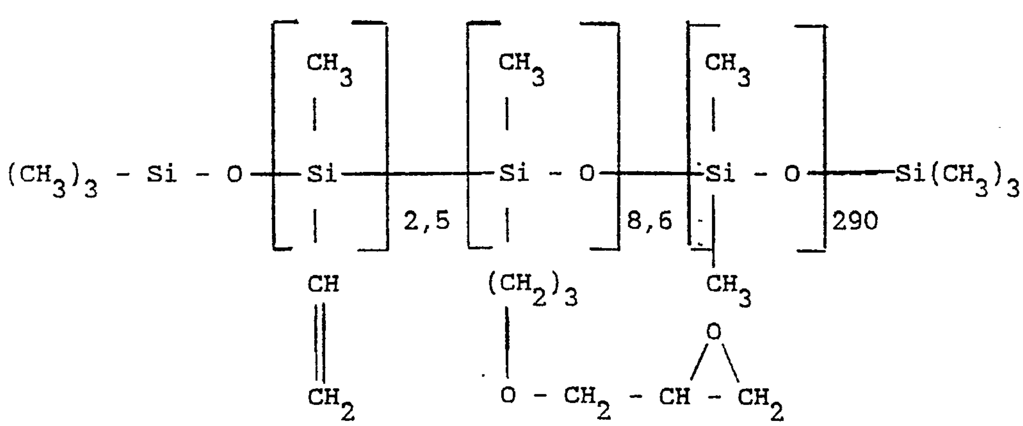

La RMN $^1$H prouve que toutes les fonctions époxy introduites demeurent intactes après la polymérisation.

| ATTRIBUTION | δppm (TMS) |
|---|---|
| $Si\underline{CH_2}-CH_2-CH_2-O-$ | 0,49 |
| $SiCH_2-\underline{CH_2}-CH_2-O-$ | 1,61 |
| $SiCH_2-CH_2-\underline{CH_2}-O-$ | 3,41 |
| $-O-\underline{CH_2}-$ | 3,66<br>3,41 |
| 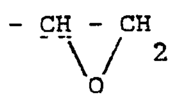 | 3,12 |
| 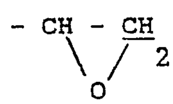 | 2,59<br>2,77 |

La pureté de l'huile obtenue est supérieure à 96 %.

## Revendications

1. - Polydiorganosiloxane choisi parmi ceux de formule :

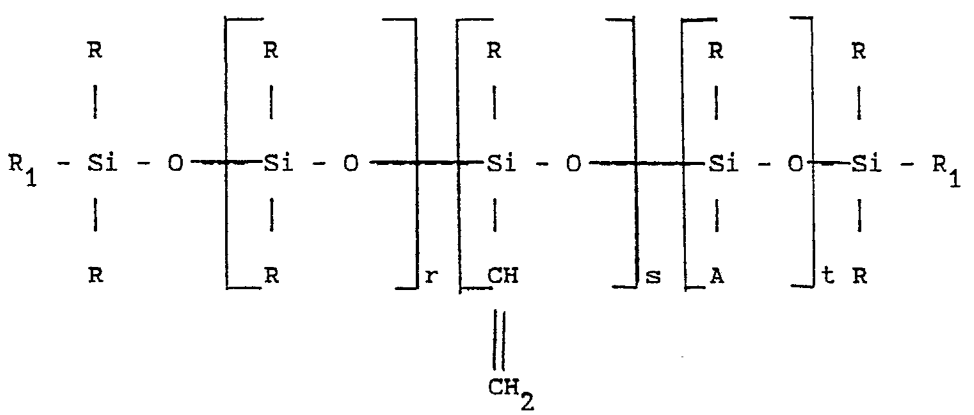 (1)

dans laquelle :
- les radicaux R sont des radicaux hydrocarbonés monovalents choisis parmi les radicaux alkyle en $C_1$-$C_{20}$, phényle, trifluoro-3,3,3 propyle,
- les radicaux $R_1$, identiques ou différents sont choisis parmi un radical R, un radical A, un radical vinyle et

un radical hydroxyle,
- le radical A est un radical organique époxy-fonctionnel ayant de 4 à 20 atomes de carbone,
- r est un nombre entier compris entre 0 et 6 000,
- s est un nombre entier compris entre 0 et 200,
- t est un nombre entier compris entre 0 et 100,
sous réserve que si s = 0, au moins un des radicaux $R_1$ est un radical vinyle,
si t = 0, au moins un des radicaux $R_1$ est un radical A,
et si s = 0 et t = 0, r est alors supérieur à 1, l'un des radicaux $R_1$ étant vinyle, l'autre radical $R_1$ étant un radical A.
Et ceux de formule :

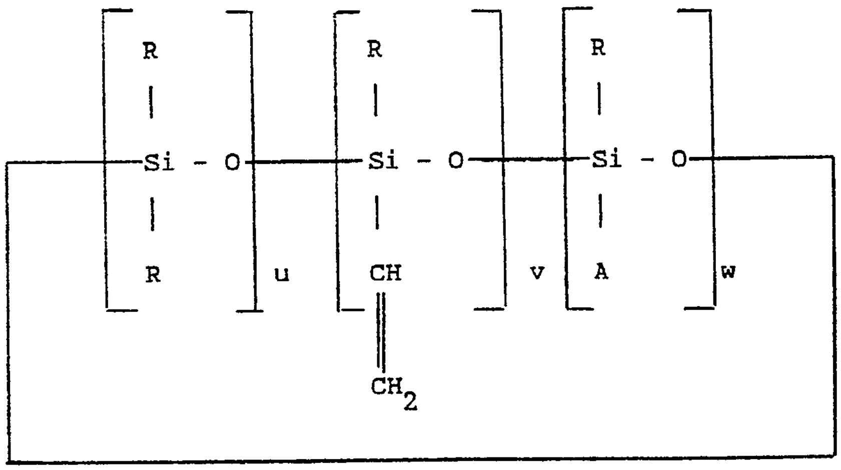

(2)

dans laquelle R et A ont la même signification qu'à la formule (1) ci-dessus.
- u est un nombre entier compris entre 0 et 10 inclus,
- v est un nombre entier compris entre 1 et 10 inclus,
- w est un nombre entier compris entre 1 et 10 inclus sous réserve que la somme de u + v + w soit au moins égale à 3.

2. - Polydiorganosiloxane selon la revendication 1, caractérisé en ce que tous les radicaux R sont méthyle.

3. - Polydiorganosiloxane selon la revendication 1 ou 2, caractérisé en ce que :
- s et t sont au moins égaux à 1,
- r est compris entre 5 et 500 inclus,
- u, v et w sont compris entre 1 et 5 inclus,
- u + v + w sont compris entre 3 et 10 inclus.

4. - Polydiorganosiloxane selon l'une quelconque des revendications précédentes, caractérisé en ce que le radical A est choisi parmi :

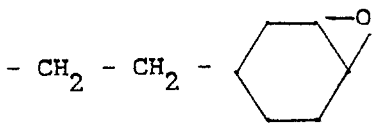

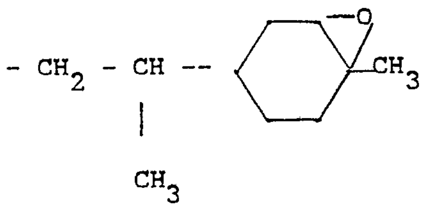

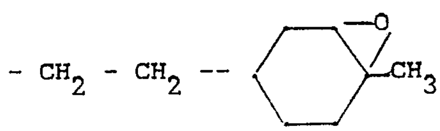

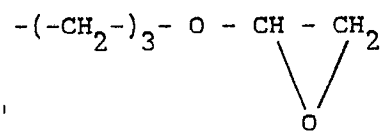

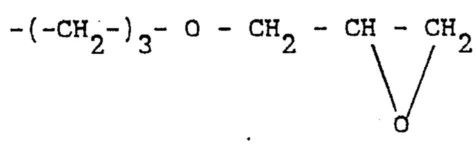

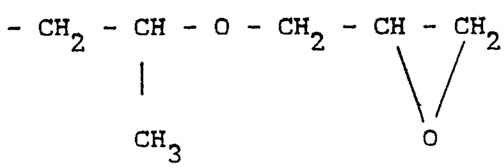

5. - Procédé de préparation d'un polydiorganosiloxane tel que défini à l'une quelconque des revendications précédentes, caractérisé en ce que l'on polymérise un mélange d'au moins un oligomère polydiorganosiloxane cyclique ou linéaire portant par molécule au moins un radical vinyle lié directement à l'atome de silicium et au moins une oligomère polydiorganosiloxane cyclique ou linéaire portant par molécule au moins un radical organique époxy fonctionnel ayant de 4 à 20 atomes de carbone en présence d'une quantité catalytiquement efficace d'un catalyseur basique.

6. - Procédé selon la revendication 5, caractérisé en ce que :

- on amorce, dans une première étape, la polymérisation d'au moins un oligomère polydiorganosiloxane cyclique ou linéaire portant par molécule au moins un radical vinyle lié directement à l'atome de silicium en présence d'une quantité catalytiquement efficace d'un catalyseur basique, et
- on ajoute, dans une deuxième étape, dans l'intervalle de temps situé entre le début et la fin de la polymérisation de la première étape, au moins un oligomère polydiorganosiloxane cyclique ou linéaire portant par molécule au moins un radical organique époxy-fonctionnel ayant de 4 à 20 atomes de carbone.

7. - Procédé selon la revendication 6, caractérisé en ce que les polydiorganosiloxanes utilisés à la première étape sont choisis parmi ceux de formule :

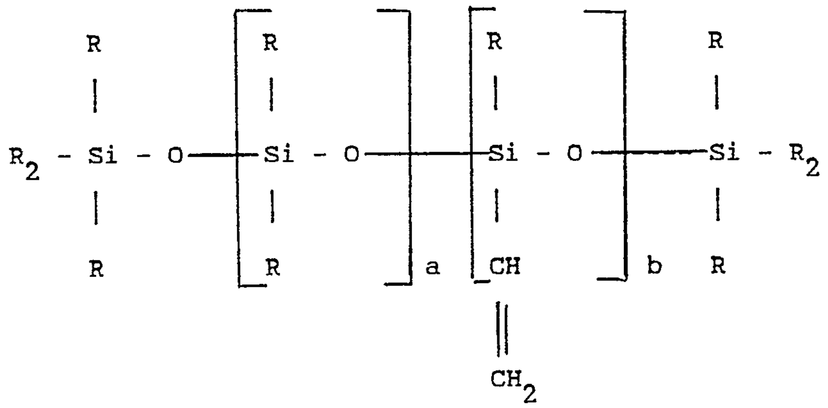

(3)

dans laquelle : les radicaux R ont la signification donnée à la formule (1) ci-dessus, $R_2$ est choisi parmi un radical R, un radical hydroxyle et un radical vinyle.
- a est un nombre entier choisi entre 0 et 50 inclus,
- b est un nombre entier choisi entre 0 et 20 inclus, sous réserve que si b = 0, au moins l'un des radicaux $R_2$ est un groupe vinyle.
Et ceux de formule :

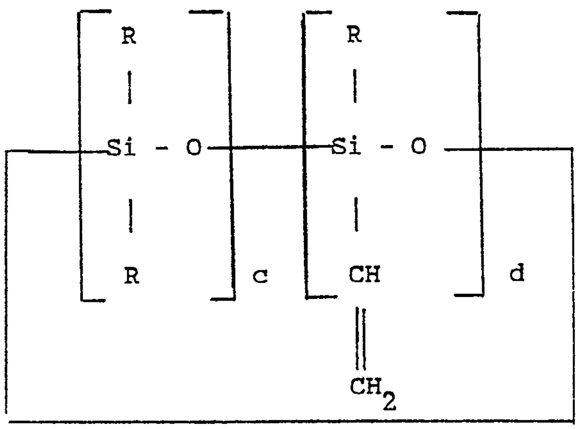

(4)

dans laquelle les radicaux R ont la signification donnée à la formule (1) ci-dessus,
- c est un nombre entier compris entre 0 et 10 inclus, et
- d est un nombre entier compris entre 1 et 10 inclus sous réserve que la somme c + d soit au moins égale à 3.

8. - Procédé selon la revendication 6 ou 7, caractérisé en ce que les polydiorganosiloxane utilisés à la deuxième étape sont choisis parmi ceux de formule :

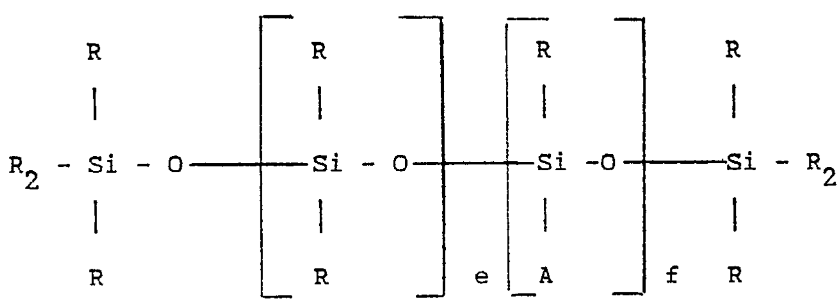

(6)

dans laquelle les radicaux R et A ont la même signification qu'à la formule (1) ci-dessus et $R_2$ est choisi parmi un radical R, un groupe hydroxyle et un groupe A,
- e est un nombre entier choisi entre 0 et 50,
- f est un nombre entier choisi entre 0 et 20,
sous réserve que si f = 0, au moins un des radicaux $R_2$ est A.
Et ceux de formule :

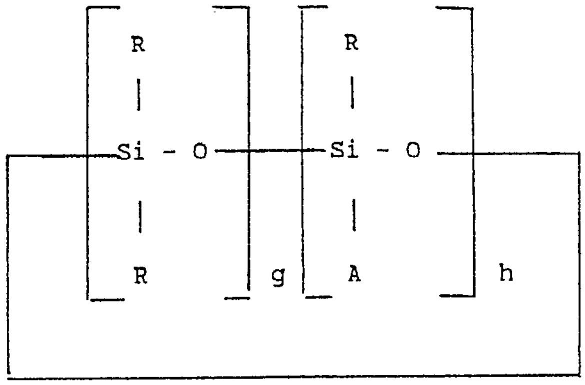

(7)

dans laquelle les radicaux R et A ont la signification donnée à la formule (1) ci-dessus,
- g est un nombre entier compris entre 0 et 10 inclus, et
- h est un nombre entier compris entre 1 et 10 inclus sous réserve que la somme g + h soit au moins égale à 3.

9. - Procédé selon l'une quelconque des revendications 6 à 8, caractérisé en ce qu'on utilise de 0,1 à 1 000 mg d'équivalent hydroxyle de métal alcalin ou alcalino-terreux par kg de diorganopolysiloxane.

10. - Procédé selon l'une quelconque des revendications 6 à 9, caractérisé en ce qu'on utilise en outre de 0,005 à 2 moles d'agent sequestrant par équivalent d'hydroxyde alcalin ou alcalino-terreux.

11. - Procédé selon la revendication 10, caractérisé en ce que l'agent sequestrant est un cryptand.

12. - Procédé selon l'une quelconque des revendications 6 à 11, caractérisé en ce que la réaction s'effectue en masse à une température comprise entre 80 et 180 °C.

13. - Utilisation d'un polydiorganosiloxane tel que défini à l'une quelconque des revendications 1 à 4 comme agent d'adhérence des compositions élastomères silicones vulcanisables à chaud en présence d'un péroxyde organique suivant une teneur de 0,1 à 10 parties en poids pour 100 parties de gomme silicone.

14. - Utilisation d'un polydiorganosiloxane tel que défini à l'une quelconque des revendications 1 à 4, comme revêtement réticulable sous UV en présence d'un photo initiateur.

Office européen des brevets

# RAPPORT DE RECHERCHE EUROPEENNE

Numero de la demande

EP 89 42 0098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 335 561 (TORAY) * Revendications 1,2; page 3, lignes 19-38; page 4, lignes 2-4; pages 5,6 * | 1,2 | C 08 G 77/20<br>C 08 G 77/14<br>C 08 G 77/44 |
| Y | DE-A-2 322 312 (UNION CARBIDE) * Revendications 1-3; page 6, paragraphe 2; page 19, exemple d * | 1,2 | |
| A | EP-A-0 164 879 (TORAY) * Revendications 1-3; pages 5,6 * | 1 | |
| A | GB-A-2 068 010 (NIPPON SHEET GLASS) * Revendication 1; page 6, exemple 5 * | 1 | |
| A | GB-A-2 093 471 (WACKER) * Revendications 1,6,7,9; page 1, lignes 71-76,119-125; page 2, lignes 1-23 * | 1 | |
| | | | DOMAINES TECHNIQUES RECHERCHES (Int. Cl.4) |
| | | | C 08 G |

Le présent rapport a été établi pour toutes les revendications

| Lieu de la recherche | Date d'achèvement de la recherche | Examinateur |
|---|---|---|
| LA HAYE | 12-07-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)